# EUROPEAN PATENT APPLICATION

(11) **EP 1 365 373 A2**
(43) Date of publication of application: **26.11.2003**
(21) Application number: 03253204.6
(22) Date of filing: 22.05.2003
(51) Int. Cl.: G08C 17/00

(54) **Electronic apparatus connection system, electronic apparatus controller, and electronic apparatus control method**

(30) Priority: 22.05.2002 JP 2002147035
(71) Applicant: Pioneer Corporation, Meguro-ku, Tokyo (JP)
(72) Inventor: Yamamura, Gaku, c/o Pioneer Corporation, Tokorozawa-shi, Saitama (JP); Hasebe, Tsuyoshi, c/o Pioneer Corporation, Tokorozawa-shi, Saitama (JP); Higuchi, Masao, c/o Pioneer Corporation, Tokorozawa-shi, Saitama (JP); Morioka, Ryuichiro, c/o Pioneer Corporation, Tokorozawa-shi, Saitama (JP); Tanaka, Yoshitaka, c/o Pioneer Corporation, Tokorozawa-shi, Saitama (JP); Minoshima, Kunihiro, c/o Pioneer Corporation, Tokorozawa-shi, Saitama (JP); Watanabe, Kazutomo, c/o Pioneer Corporation, Tokorozawa-shi, Saitama (JP); Inagaki, Katsutoshi, c/o Pioneer Corporation, Tokorozawa-shi, Saitama (JP); Shirosaki, Yasuo, c/o Pioneer Corporation, Tokorozawa-shi, Saitama (JP)
(74) Representative: Haley, Stephen

(57) **Abstract**

An electronic apparatus connection system, includes: a plurality of unit systems, at least two of the unit systems respectively including a control section for controlling at least a portion of the unit system to which the control section belongs. The control sections are connected so as to mutually communicate. Each of the control section stores setting as to a use state of the unit system to which the control section belongs. The control section in one of the plurality of unit systems hands the setting to another control section in another one of the unit systems in accordance with location movement of a user.

## Description

The present disclosure relates to the subject matter contained in Japanese Patent Application No. 2002-147035 filed May 22, 2002, which is incorporated herein by reference in its entirety.

The present invention relates to an electronic apparatus connection system, an electronic apparatus controller and an electronic apparatus control method. Particularly it relates to an electronic apparatus connection system, an electronic apparatus controller and an electronic apparatus control method in which information set by a user is exchanged between electronic apparatus controllers which control electronic apparatuses such as AV apparatuses (audio-video apparatuses) and which belong to unit systems respectively, by a network.

As a related-art electronic apparatus network system, there is known a system in which a plurality of AV apparatuses are connected to a managing apparatus such as a personal computer by communication as the technique disclosed in JP-A-2000-307594.

In the JP-A-2000-307594, there is described a function or means for optimally distributing redundant decoding, encoding, recording and playback functions to a plurality of AV apparatuses connected by a network constructed in a home.

In the related-art electronic apparatus network system, it is however necessary to power off electronic apparatuses installed in a room before movement of a user, for example, when the user wants to move from the room where the user watches or listens to a broadcast program to another room.

Moreover, when the user wants to continue to watch or listen to the same broadcast program, the user must power on electronic apparatuses installed in the room after the movement and must instruct a remote controller to select the same broadcast channel as the broadcast channel watched or listened to by the user before the movement. Accordingly, there is a problem that much operational labor is required and watching or listening of the broadcast program which has been watched or listened to by the user is interrupted by the time required for the operation and instruction and the time required for execution of the instruction.

Moreover, there is the necessity of re-setting the volume, tone quality, image quality, etc. set in the room before the movement properly in accordance with the broadcast program. Hence, there is a problem that a large interrupt time is required.

As described above, in the related-art electronic apparatus network system, the use conditions for electronic apparatuses located in the room be fore the movement can be hardly handed over to electronic apparatuses located in the room after the movement when the user moves from one room to another room.

The invention is developed in consideration of the problems in the related art and an object of the invention is to provide an electronic apparatus network system in which the use conditions for electronic apparatuses located in a room before movement of a user can be handed over to electronic apparatuses located in a room after the movement of the user, with the movement of the user.

To achieve the above-mentioned object, the invention provides an electronic apparatus connection system, including: a plurality of unit systems, at least two of the unit systems respectively including a control section for controlling at least a portion of the unit system to which the control section belongs. The control sections are connected so as to mutually communicate. Each of the control section stores setting as to a use state of the unit system to which the control section belongs. The control section in one of the plurality of unit systems hands the setting to another control section in another one of the unit systems in accordance with location movement of a user.

Accordingly, the operation required for terminating (e.g., powering off) the previously used electronic apparatuses with the location movement of the user can be dispensed with while the operation for starting (e.g., powering on) the newly used electronic apparatuses and the operation for re-setting the newly used electronic apparatuses by the same procedure as applied to the previously used electronic apparatuses before the movement can be dispensed with.

Preferably, the electronic apparatus connection system further includes a user setting command unit and a user setting unit. One of the control sections is selected so as to control a unit system placed at a location after the movement of the user, in accordance with the location movement of the user. The user setting command unit gives a user setting command to a newly selected control section to set the user as a new user. The user setting unit sets the user as a new user of the newly selected control section which receives the user setting command.

Accordingly, there can be achieved an electronic apparatus network system in which the use conditions set in an electronic apparatus controller of a unit system installed at a location before the movement of the user can be handed over to another electronic apparatus controller of another unit system installed at a location after the movement of the user.

Preferably, the control section gives a user setting notification indicating that the new user is set in the newly selected control section. The control section includes a history information sending unit and an operation restoration unit. The history information sending unit sends history information indicating a history of user operations to any other control section when a notification of the user setting is received from the any other control section and the already set user is identical to a user designated by the notification of the user setting. The operation restoration unit operates the unit system on the basis of the history information when a response to the notification is received and the history information is contained in the response.

Accordingly, the operations which have been made on the previously used electronic apparatus controller by the user before the switching can be reproduced on electronic apparatuses connected to the newly used electronic apparatus controller after the switching on the basis of the history information indicating a history of user operations.

Preferably, the electronic apparatus connection system further includes an operation command transmission unit for transmitting the operation command inputted by the user to a nearest control section therefrom.

Accordingly, because the operation command transmission unit transmits the operation command inputted by the user to the nearest electronic apparatus controller, the location after the movement of the user can be specified surely.

Preferably, the operation command transmission unit has a user identification unit. The user identification includes an entrance/exit sensor, a push button, a wireless tag or a portable telephone.

Accordingly, there can be achieved an electronic apparatus network system in which the user can be identified easily and surely.

Preferably, the operation command transmission unit has a two-way communication unit, and a display unit for displaying the operation command/data inputted by the user and information transmitted from the nearest electronic apparatus controller.

Accordingly, there can be achieved an electronic apparatus network system in which the user's input operation transmitted by the operation command transmission unit can be made surely while information about the states of the electronic apparatuses to be operated by the user can be grasped.

Preferably, at least one of the control sections is capable of controlling a plurality of unit systems each having a communication unit. The communication unit is capable of communicating with the operation command transmission unit.

The invention provides an electronic apparatus controller for controlling at least one electronic apparatus, the electronic apparatus controller belonging to each of a plurality of unit systems which are connected to one another so that the unit systems can communicate with one another. The electronic apparatus controller includes: an operation unit for operating the at least one electronic apparatus when an operation command inputted by a user is received; a history information sending unit for sending history information indicating a history of user operations to any other control section when a notification of user setting is received from the any other control section with location movement of the user and the already set user is identical to a user designated by the notification of the user setting; a user setting unit for setting the user as a new user when a user setting command to set the user as a new user is received with the location movement of the user; and an operation restoration unit for operating at least one electronic apparatus connected to the electronic apparatus controller on the basis of the history information indicating a history of user operations when a response to the notification is received and the history information is contained in the response.

Accordingly, there can be achieved an electronic apparatus controller having a control section necessary for forming an electronic apparatus network system in which the operation required for terminating (e.g., powering off) the previously used electronic apparatuses with the location movement of the user can be dispensed with while the operation for starting (e.g., powering on) the newly used electronic apparatuses and the operation for re-setting the newly used electronic apparatuses by the same procedure as applied to the previously used electronic apparatuses before the movement can be dispensed with.

The invention further provides an electronic apparatus control method of a electronic apparatus controller for controlling at least one electronic apparatus, the electronic apparatus controller belonging to each of a plurality of unit systems which are connected to one another so that the unit systems can communicate with one another. The method includes: operating the at least one electronic apparatus connected when an operation command inputted by a user is received; sending history information indicating a history of user operations to any other control section when a notification of user setting is received from the any other control section with location movement of the user and the already set user is identical to a user designated by the notification of the user setting; canceling the already set user' s viewing as a post-process after sending of the history information; setting the user as a new user when a user setting command to set the user as a new user is received with the location movement of the user; notifying all of the other control sections of setting of the user as a new user after the user setting; and operating at least one electronic apparatus connected to the electronic apparatus controller on the basis of the history information indicating a history of user operations when a response to the notification is received and the history information is contained in the response.

### In the Drawings:

The present invention may be more readily described with reference to the accompanying drawings:
Fig. 1 is a configuration view showing an electronic apparatus network system according to an embodiment of the invention.
Fig. 2 is a configuration view showing one of electronic apparatus controllers according to the embodiment of the invention.
Fig. 3 is a configuration view showing a remote controller used in the electronic apparatus network system according to the embodiment of the invention.
Fig. 4 is a view (1/4) for explaining an example of the operation of the electronic apparatus network system according to the embodiment of the invention.
Fig. 5 is a view (2/4) for explaining the example of the operation of the electronic apparatus network system according to the embodiment of the invention.
Fig. 6 is a view (3/4) for explaining the example of the operation of the electronic apparatus network system according to the embodiment of the invention.
Fig. 7 is a view (4/4) for explaining the example of the operation of the electronic apparatus network system according to the embodiment of the invention.
Fig. 8 is a flow chart showing the operation of the electronic apparatus network system according to the embodiment of the invention in a "user setting wait mode".
Fig. 9 is a flow chart showing the operation of the electronic apparatus network system according to the embodiment of the invention in a "user action wait mode".
Fig. 10 is a view showing an example in which one electronic apparatus controller corresponds to aplurality of unit systems.

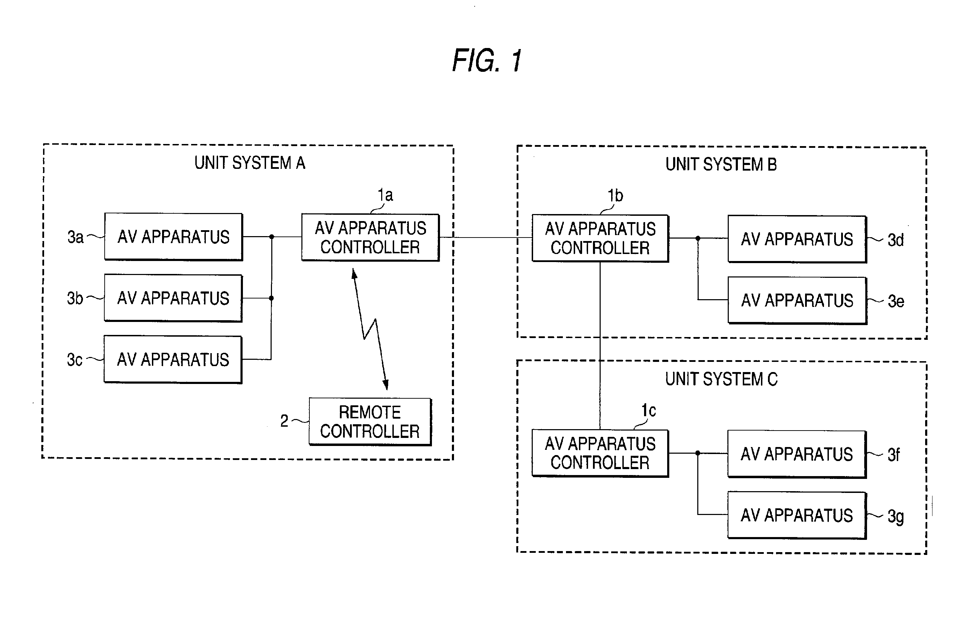

An embodiment of the invention will be described below in detail with reference to the drawings. Fig. 1 is a configuration view showing an AV apparatus network system which is an electronic apparatus network system according to an embodiment of the invention.

As shown in Fig. 1, the AV apparatus network system according to this embodiment has a unit system A, a unit system B and a unit system C. The unit systems A, B and C are equivalent to systems which are included in an AV apparatus network system in a home and which are installed in rooms of the home respectively.

The unit system A has an AV apparatus controller 1a as an electronic apparatus controller, a remote controller 2 for transmitting a command to the AV apparatus controller 1a by wireless, and AV apparatuses 3a to 3c which are connected to the AV apparatus controller 1a by a network so that two-way communication can be made.

The unit system B has an AV apparatus controller 1b as an electronic apparatus controller, and AV apparatuses 3d and 3e which are connected to the AV apparatus controller 1b by a network so that two-way communication can be made.

The unit system C has an AV apparatus controller 1c as an electronic apparatus controller, and AV apparatuses 3f and 3g which are connected to the AV apparatus controller 1c by a network so that two-way communication can be made.

The AV apparatus controller 1a in the unit system A, the AV apparatus controller 1b in the unit system B and the AV apparatus controller 1c in the unit system C are designed to be connected to one another by a network so that two-way communication can be made.

The remote controller 2 (having an operation command transmission means, and a display means) is designed to be able to send a command to the AV apparatus controllers 1b and 1c by wireless. The remote controller 2 further has some user identification means (having an entrance and exit sensor, a push button, a wireless tag, a potable telephone, etc.) and is designed to be able to execute the identification means.

Respective constituent members of the AV apparatus network system according to this embodiment will be described below.

A user can set and operate the AV apparatuses 3a to 3g by using the remote controller 2. Incidentally, the remote controller 2 is connected to the nearest one of the AV apparatus controllers 1a to 1c by wireless communication in one-to-one correspondence. That is, the remote controller 2 has a function for always monitoring the state of electric wave and automatically switching the connection (channel) of wireless communication to communicate with the nearest one of the AV apparatus controllers 1a to 1c in one-to-one correspondence.

The AV apparatus controllers 1a to 1c are networked by interfaces such as Ethernet (trademark registered) so that the AV apparatus controllers 1a to 1c can two-way communicate with one another.

Accordingly, each of the AV apparatus controllers 1a to 1c can acquire information indicating the state of any one of AV apparatuses belonging to the other unit systems. Further, setting and existing operation data (operation history) of AV apparatuses belonging to one unit system can be reproduced on any one of AV apparatuses belonging to any other unit system by an AV apparatus controller belonging to the other unit system.

The AV apparatus controller 1a is networked to the AV apparatuses 3a to 3c by interfaces such as IEEE1394 so that the AV apparatus controller 1a can two-way communicate with the AV apparatuses 3a to 3c. The AV apparatus controller 1b is networked to the AV apparatuses 3d and 3e by interfaces such as IEEE1394 so that the AV apparatus controller 1b can two-way communicate with the AV apparatuses 3d and 3e. The AV apparatus controller 1c is networked to the AV apparatuses 3f and 3g by interfaces such as IEEE1394 so that the AV apparatus controller 1c can two-way communicate with the AV apparatuses 3f and 3g. Accordingly, the AV apparatus controller 1a can set and operate the AV apparatuses 3a to 3c (operation means) and can acquire information from the AV apparatuses 3a to 3c.

The AV apparatus controller 1b can set and operate the AV apparatuses 3d and 3e (operation means) and can acquire information from the AV apparatuses 3d and 3e.

The AV apparatus controller 1c can set and operate the AV apparatuses 3f and 3g (operation means) and can acquire information from the AV apparatuses 3f and 3g.

The AV apparatus controller 1a further has a function for holding the information about the setting and operation of the AV apparatuses 3a to 3c and the information acquired from the AV apparatuses 3a to 3c. The AV apparatus controller 1b further has a function for holding the information about the setting and operation of the AV apparatuses 3d and 3e and the information acquired from the AV apparatuses 3d and 3e. The AV apparatus controller 1C further has a function for holding the information about the setting and operation of the AV apparatuses 3f and 3g and the information acquired from the AV apparatuses 3f and 3g.

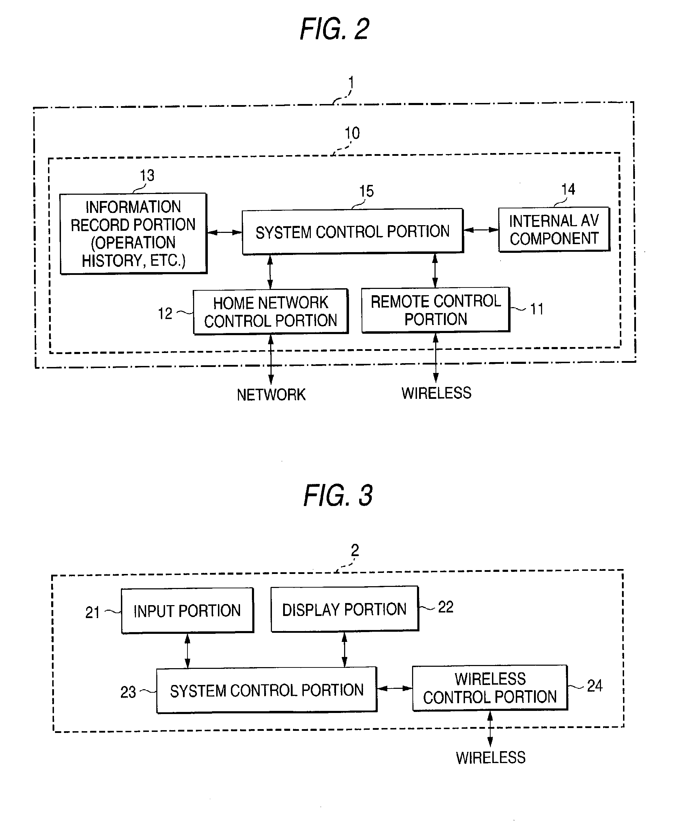

Fig. 2 is a configuration view showing an AV apparatus controllers according to the embodiment of the invention.

According to the embodiment, the AV apparatus controller 1 shown in Fig. 2 has a control section 10. The control section 10 has a remote control portion 11, a home network control portion 12, an information record portion 13, an internal AV component 14, and a system control portion 15. The remote control portion 11 has an interface with the remote controller 2 and relays a command from the remote controller 2 . The home network control portion 12 controls its own AV apparatuses through the network and two-way communicates with AV apparatus controllers belonging to the other unit systems. The information record portion 13 records information about the setting and operation of its own AV apparatuses as history information. The internal AV component 14 is an AV apparatus built in the AV apparatus controller. The system control portion 15 controls the AV apparatus network system as a whole in accordance with a command given from the remote controller 2 or any other unit system.

The internal AV component 14 is a constituent member equivalent to a built-in AV apparatus. If there is no built-in AV apparatus, the internal AV component 14 can be dispensed with (that is, the internal AV component 14 is optional).

According to the embodiment, the respective constituent members of the AV apparatus controller shown in Fig. 2 will be described below.

The remote control portion 11 relays wireless communication between the remote controller 2 and the system control portion 15. A wireless LAN, Bluetooth, or the like, can be used as a medium of the wireless communication.

The remote control portion 11 receives a user operation request from the remote controller 2 and relays the operation request to the system control portion 15. When the remote controller 2 is moved while being carried by the user, the remote controller 2 notifies the remote control portion 11 that the user will switch from the unit system to another unit system according to this movement. As a result, the remote control portion 11 relays this notification to the system control portion 15. (The switching from the unit system to which the AV apparatus controller belongs to another unit system in accordance with this movement is detected by the remote controller 2).

The home network control portion 12 provides two-way communication means for controlling its own AV apparatuses connected to the network, transmitting AV contents and cooperating with the AV apparatus controllers belonging to the other unit systems.

The information record portion 13 records history information about all operations sent from a specific remote controller (generally, a remote controller corresponding to a specific user identified, i.e., the remote controller 2 in this embodiment) until now. The operations until now include the settings of the AV apparatuses.

The internal AV component 14 is an AV apparatus built in the AV apparatus controller 1 and is optional. When the internal AV component 14 is built in the AV apparatus controller 1, the internal AV component 14 is treated with no difference from the AV apparatuses 3 by the system control portion 15.

The system control portion 15 controls the system as a whole in accordance with a command given from the remote controller 2 or any other unit system. More specifically, control by the system control portion 15 is executed in two modes.

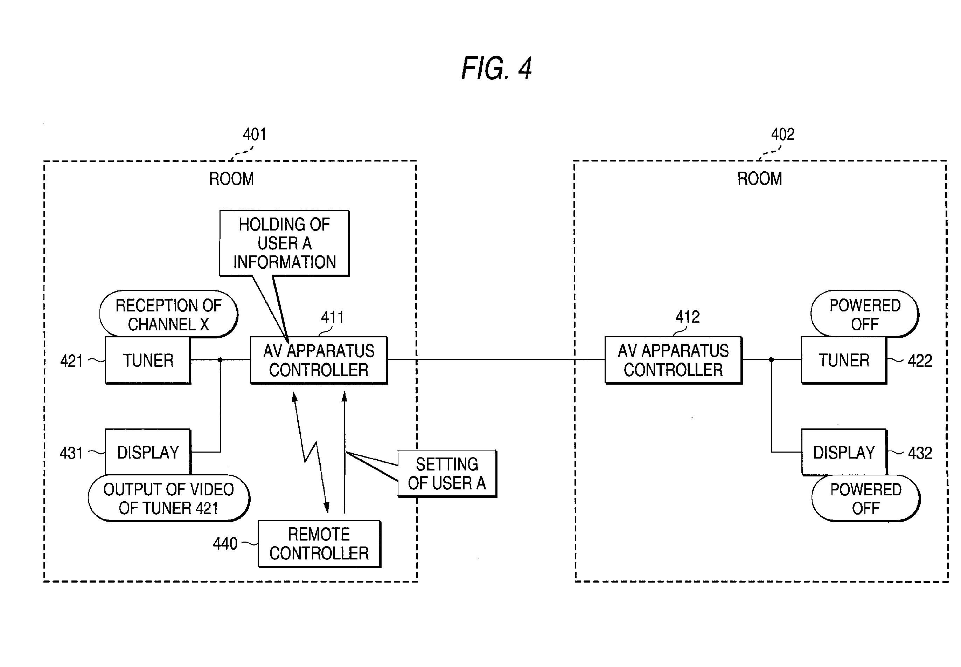

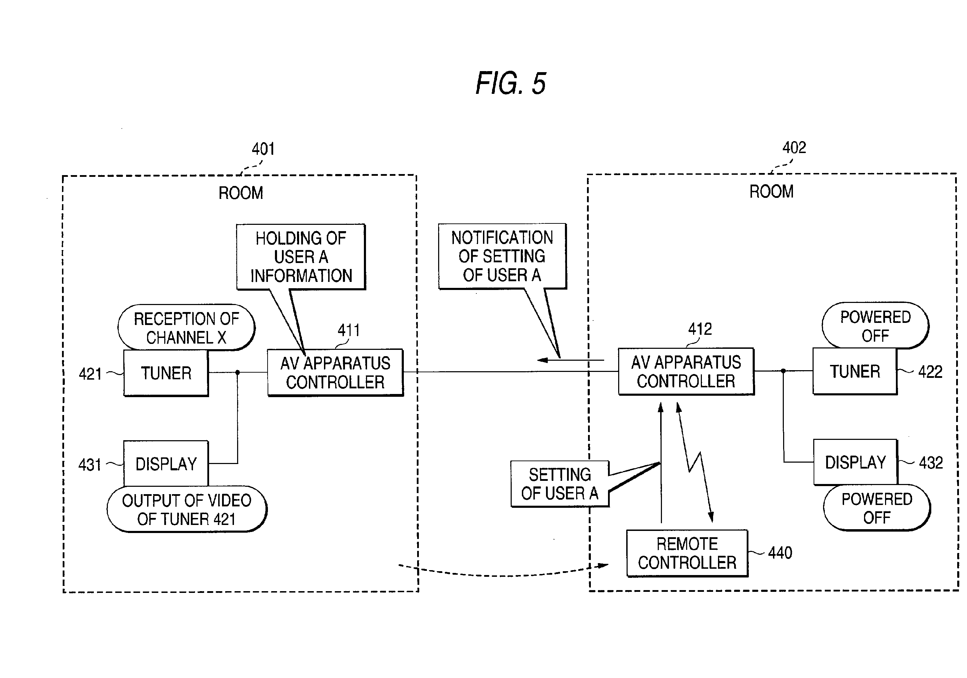

One of the two modes is an operation mode in a system control portion 15 of an AV apparatus controller newly selected to be used by the user (e.g., an AV apparatus controller 412 shown in Figs. 4 and 5 as will be described later), that is, a "user setting wait mode". The other mode is an operation mode in a system control portion 15 of an AV apparatus controller which is not the target used by the user (e.g., an AV apparatus controller 411 shown in Figs. 4 and 5 as will be described later), that is, a "user action wait mode".

First, in the "user setting wait mode", the system control portion 15 judges whether or not a request to set a new user (hereinafter referred to as "new user setting request") is received through the remote control portion 11. (Incidentally, when the AV apparatus controller connected by wireless is switched to another AV apparatus controller in accordance with the movement of the user, the remote controller 2 sends the user setting request to the other AV apparatus controller switched and connected by wireless (user setting command means ) ) . When there is no user setting request received, the system control portion 15 repeats the judgment to wait for reception of the new user setting request.

When the new user setting request is received, the system control portion 15 sets (registers) the user issuing the request (user setting means) and then notifies AV apparatus controllers belonging to the other unit systems, of the completion of the new user setting (user setting notification means).

The system control portion 15 further judges whether or not a response to the notification is received from any one (e.g., the AV apparatus controller 411 shown in Figs. 4 and 5 as will be described later) of the other AV apparatus controllers through the home network control portion 12. When there is no response received, the system control portion 15 repeats the judgment until the response from any one of the other AV apparatus controllers is received.

When a response is received, the system control portion 15 judges whether or not responses to the notification have been already received from all the other AV apparatus controllers. When there remains an AV apparatus controller from which such a response has been not received yet, the system control portion 15 waits until responses from all the other AV apparatus controllers are received through the home network control portion 12.

When responses have been already received from all the other AV apparatus controllers, the system control portion 15 judges whether or not the responses received from the other AV apparatus controllers through the home network control portion 12 contain operation history information indicating the history of operations executed in the other AV apparatus controllers by the user issuing the request. When there is no operation history information contained in the responses, the operation mode of the system control portion 15 shifts from the "user setting wait mode" to the "user action wait mode".

When there is operation history information contained in the responses, the system control portion 15 reproduces the operations executed in the other AV apparatus controllers by the user, on an AV apparatus controlled through its own home network control portion 12 on the basis of the history information (operation restoration means).

Next, in the "user action wait mode", the system control portion 15 judges whether or not an operation request is received from the user through the remote control portion 11. Whenever the operation request is received from the user, a process (an operation inclusive of setting of anAV apparatus) corresponding to the operation requested by the user is executedwhile a process for recording this operation as history information in the information record portion 13 is repeated in accordance with the operation request.

When there is no operation request received from the user, the system control portion 15 judges whether or not notification of new user setting is received from any one (e.g., the AV apparatus controller 412 shown in Figs. 4 and 5 as will be described later) of the other AV apparatus controllers. When there is no notification received, the situation of the procedure goes back to the step of judging whether or not an operation request is received from the user.

When the notification is received, the system control portion 15 judges whether or not the user designated by the received notification of the new user setting is identical to the currently set user (i.e., the user issuing the operation request).

When the user is not identical, the user designated by the notification of the new user setting is registered as a user of the unit system to which the other AV apparatus controller issuing this notification belongs. Then, the situation of the procedure goes back to the step of judging whether or not an operation request is received from the user.

When the user is identical, the system control portion 15 sends the operation history information recorded in the information record portion 13 of its own AV apparatus controller for indicating the history of operations until now, to the other AV apparatus controller issuing the notification of the new user setting (history information sending means).

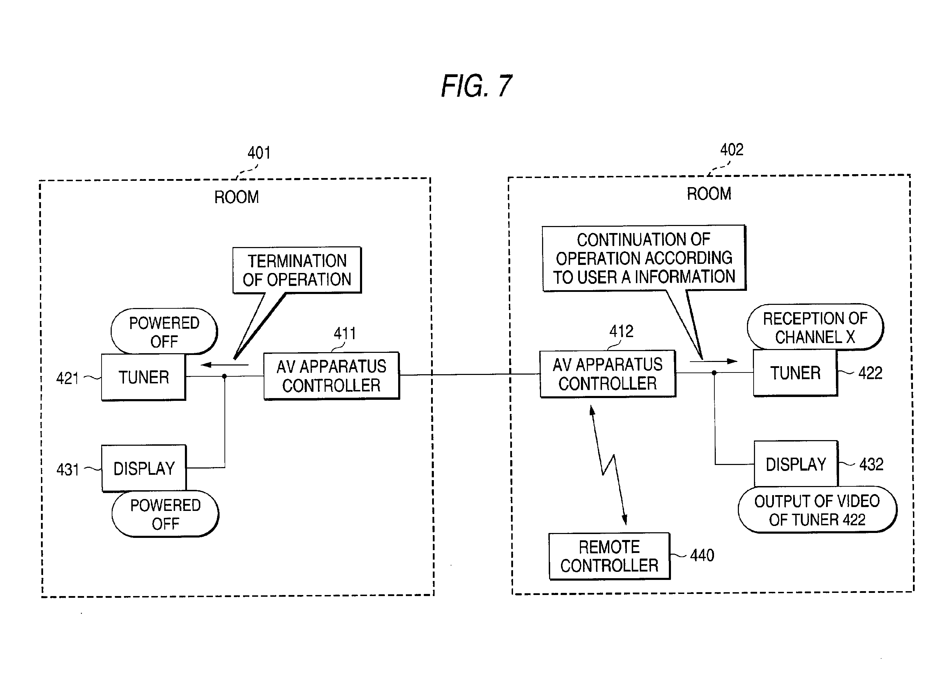

Then, a process for terminating the current user' s viewing (e.g., a process of powering off a tuner 421 and a display 431 shown in Fig. 7 as will be described later) is executed and a process for canceling the current user setting is executed. Then, the operation mode of the system control portion 15 shifts from the "user action wait mode" to the "user setting wait mode".

Fig. 3 is a configuration view showing the remote controller in the embodiment of the invention.

According to the embodiment, the remote controller 2 shown in Fig. 3 has an input portion 21, a display portion 22, a system control portion 23, and a wireless control portion 24. The input portion 21 receives a command from the user. The display portion 22 displays the user command or the like on a display screen. The system control portion 23 controls the system as a whole. The wireless control portion 24 sends an operation command to the AV apparatus controller 1 belonging to the nearest unit system by wireless.

The respective constituent members of the remote controller 2 in the embodiment will be described below.

Upon reception of a command due to a user's operation, the input portion 21 delivers the command to the system control portion 23. The display portion 22 displays the command/data inputted by the user on a display screen on the basis of a command given from the system control portion 23. The state of electric wave in the AV apparatus controller 1 and information received from the AV apparatus controller 1 can be also displayed.

The system control portion 23 receives the command/data inputted by the user from the input portion 21 and sends the command/data to the AV apparatus controller by wireless through the wireless control portion 24.

Upon reception of the command/data from the system control portion 23, the wireless control portion 24 sends the command/data to the AV apparatus controller by wireless. Further, the wireless control portion 24 monitors the state of electric wave in the AV apparatus controller and automatically performs switching of the AV apparatus controller connected by wireless to the remote controller 2 so that the wireless control portion 24 can communicate with the nearest AV apparatus controller by wireless. When the AV apparatus controller to be connected by wireless is switched to another AV apparatus controller, the wireless control portion 24 sends the notification of the user setting request to the AV apparatus controller switched and connected by wireless. In addition, the wireless control portion 24 may receive information from the AV apparatus controller allowed to communicate with the remote controller 2 by wireless, and deliver the information to the system control portion 23.

Figs. 4 to 7 are views for explaining an example of the operation of the AV apparatus network system according to the embodiment of the invention.

The configuration of each of AV apparatus controllers 411 and 412 shown in Figs. 4 to 7 is the same as the AV apparatus controller 1 shown in Fig. 1.

Assume now that a user A first watches a program on broadcast channel X received by a tuner 421 belonging to a unit system installed in a room 401, the program being displayed on a display 431 (see Fig. 4) . In this state, a remote controller 440 in the user A's hand is communicating with an AV apparatus controller 411 belonging to the unit system installed in this room 401 by wireless in one-to-one correspondence (see Fig. 4).

Also in this state, the remote controller 440 sets the AV apparatus controller 411 to be used by the user A. Various kinds of operation information including setting information inputted by the user A through the remote controller 440 are recorded as user information in the information record portion 13 shown in Fig. 2 (see Fig. 4).

When some situation makes the user A have to move from the room 401 to another room 402 but the user A still wants to continue to watch the program on broadcast channel X in the room 402, the user A can move from the room 401 to the room 402 while carrying the remote controller 440.

Accordingly, the remote controller 440 also moves from the room 401 to the room 402. With the movement of the remote controller 440, the AV apparatus controller to be connected to the remote controller 440 by wireless is switched from the AV apparatus controller 411 in the room 401 to the AV apparatus controller 412 in the room 402 (see Fig. 5).

With such switching, the remote controller 440 notifies the AV apparatus controller 412 that the user A will use the unit system installed in the room 402. Upon reception of this notification, the AV apparatus controller 412 likewise notifies all AV apparatus controllers belonging to the other unit systems on the network that the user Awill use the unit system installed in the room 402 (see Fig. 5).

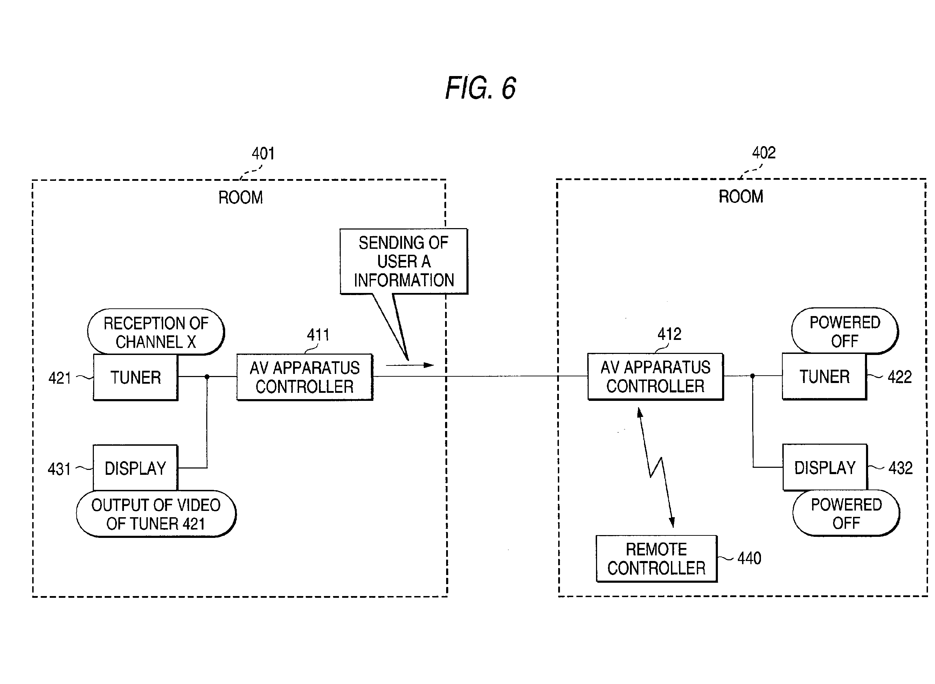

Upon reception of the notification, the previous AV apparatus controller which has been connected to the remote controller 440 by wireless in one-to-one correspondence until now (i.e., the AV apparatus controller 411 belonging to the unit system installed in the room 401 which has been used by the user A until now in this example) sends the user A's information (operation history information) recorded in the information record portion 13 of the unit system including the AV apparatus controller 411 to the AV apparatus controller issuing the notification (i.e., the AV apparatus controller 412 in this example) after the AV apparatus controller 411 concludes that the user A designated by the notification is identical to the user (that is, user A) which made a connection to the AV apparatus controller 411 just before the reception of the notification (see Fig. 6).

Then, the AV apparatus controller 412 makes operation (including setting) on AV apparatuses belonging to the unit system including the AV apparatus controller 412 as sufficiently as possible on the basis of the user A's operation history information given from the AV apparatus controller 411.

That is, in this example, a tuner 422 and a display 432 belonging to the unit system installed in the room 402 are set so that the tuner 422 and the display 432 are powered on, the channel received by the tuner 422 is tuned to broadcast channel X and the video received by the tuner 422 is supplied to the display 432 (see Fig. 7).

On the other hand, upon reception of the notification from the AV apparatus controller 412, the AV apparatus controller (i.e., the AV apparatus controller 411 in this example) belonging to the unit system installed in the room 401 which was used by the user A until now terminates the operation carried out in the room 401 after sending the operation history information to the AV apparatus controller 412. That is, the AV apparatus controller 411 powers off the tuner 421 and the display 431 in this example (see Fig. 7).

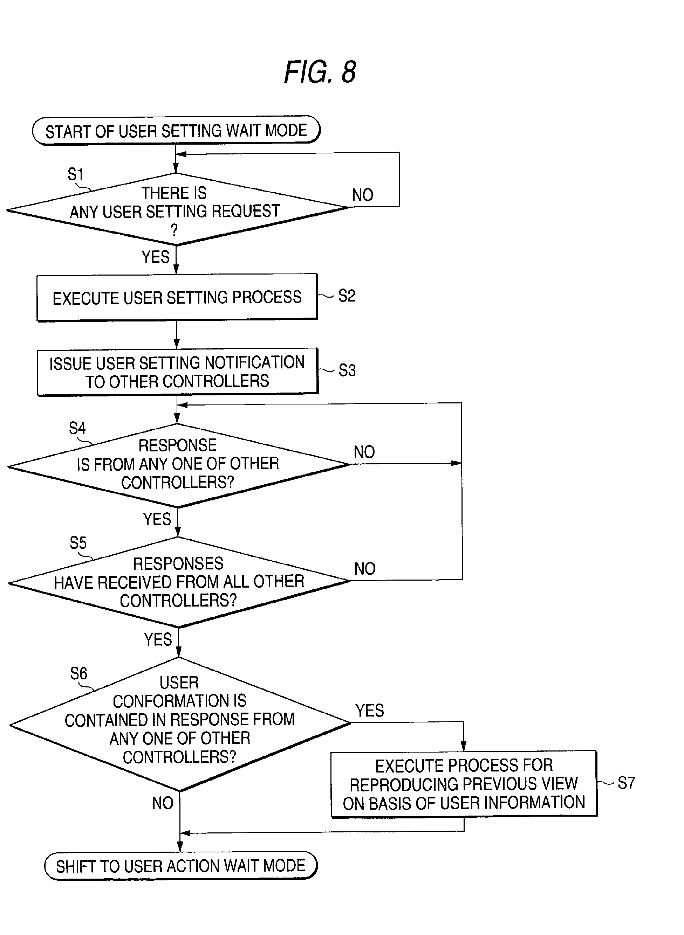

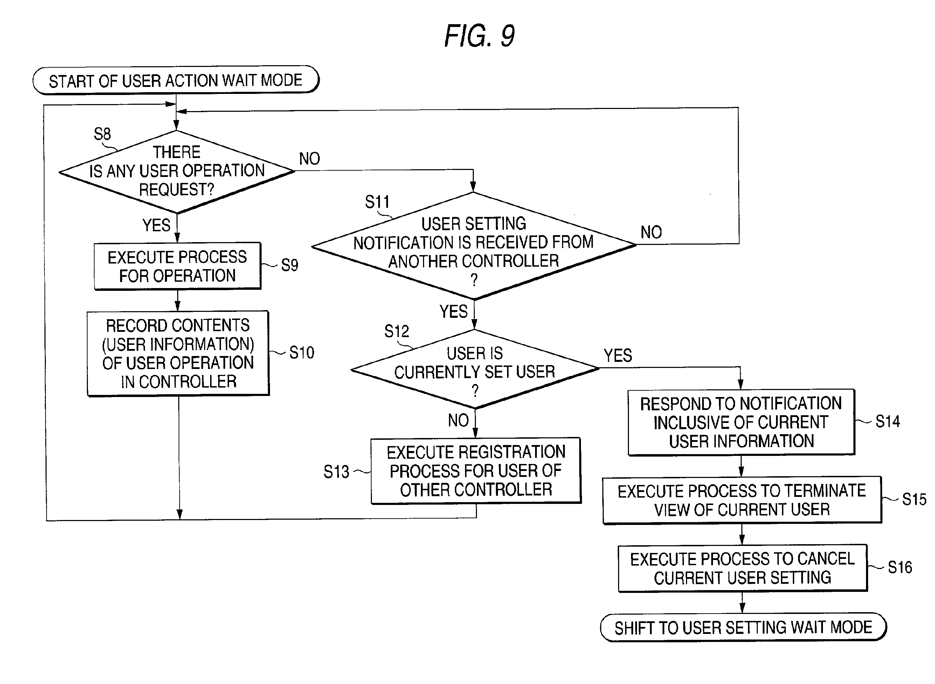

Figs. 8 and 9 are flow charts showing the operation of the AV apparatus network system according to the embodiment of the invention.

Steps S1 to S7 in Fig. 8 show an operation in an AV apparatus controller to be newly used by the user (e.g., the AV apparatus controller 412 shown in Figs. 4 and 5), that is, an operation in the "user setting wait mode". Steps S8 to S16 in Fig. 9 show an operation in an AV apparatus controller which is not the target to be used by the user (e.g., the AV apparatus controller 411 shown in Figs. 4 and 5), that is, an operation in the "user action wait mode".

The operation of the AV apparatus network system according to the embodiment will be described below with reference to the flow charts shown in Figs. 8 and 9 in connection with Figs. 1 to 7.

First, the operation in the "user setting wait mode" shown in steps S1 to S7 in Fig. 8 is as follows.

In step S1, a judgment is made as to whether a request to set a new user is received by the AV apparatus controller (e.g., the AV apparatus controller 412 shown in Figs. 4 and 5).

Incidentally, when the AV apparatus controller to be connected by wireless (e.g., the remote controller 440 shown in Figs. 4 and 5) is switched to another AV apparatus with the movement of the user, the remote controller sends the new user setting request to the AV apparatus switched and connected by wireless.

When the new user setting request is received from the remote controller, the situation of the procedure goes to step S2. When there is no new user setting request received, the situation of the procedure goes back to the step S1. Next, in step S2, the user issuing the request is set (registered) in the AV apparatus controller.

Next, in step S3, the AV apparatus controller notifies AV apparatus controllers belonging to the other unit systems that the new user has been set. Next, in step S4, a judgment is made as to whether or not a response to the notification is received from any one of the other AV apparatus controllers (e.g., the AV apparatus controller 411 shown in Figs. 4 and 5). When the response is received, the situation of the procedure goes to step S5. When there is no response received, the situation of the procedure goes back to the step S4.

Next, in step S5, a judgment is made as to whether or not responses to the notification have been already received from all the other AV apparatus controllers. When reception of the responses from all the other AV apparatus controllers is completed, the situation of the procedure goes to step 56. When reception of the responses from all the other AV apparatus controllers is not completed, the situation of the procedure goes back to the step S4.

Next, in step S6, a judgment is made as to whether or not the responses received from the other AV apparatus controllers contain operation history information indicating the history of the operations of the other AV apparatus controller made by the user issuing the request. When the operation history information is contained, the situation of the procedure goes to step S7. When there is no operation history information contained, the mode shifts to the "user action wait mode" shown in steps S8 to S16.

Next, in step S7, the user's operations of the other AV apparatus controller is reproduced on an AV apparatus connected to the AV apparatus controller receiving the new user setting request, on the basis of the history information.

Next, the operation in the "user action wait mode" shown in steps S8 to S16 in Fig. 9 is described.

In step S8, a judgment is made as to whether or not the AV apparatus controller (e.g., the AV apparatus controller 411 shown in Figs. 4 and 5) receives an operation request from the user. When the operation request is received from the user, the situation of the procedure goes to step S9. When there is no operation request received from the user, the situation of the procedure goes to step S11.

Next, in step 39, aprocess (an operation including setting of AV apparatuses) corresponding to the operation requested by the user is executed. In step S10, this operation is recorded as history information in the information record portion 13. Then, the situation of the procedure goes back to the step S8 to wait for the next operation request.

In step S11, a judgment is made as to whether or not a notification of the new user setting is received from any other AV apparatus controller (e.g., the AV apparatus controller 412 shown in Figs. 4 and 5). When the notification is received, the situation of the procedure goes to step S12. When there is no notification received, the situation of the procedure goes back to the step S8.

Next, in step S12, a judgment is made as to whether or not the user designated by the received notification of the new user setting is identical to the currently set user (i.e., the user issuing the operation request) . When the user is not identical, the situation of the procedure goes to step S13. When the user is identical, the situation of the procedure goes to step S14.

Next, in step S13, the user designated by the notification of the new user setting is registered as a user of the other AV apparatus controller issuing the notification.

In step S14, operation history information indicating the history of operations recorded in the information record portion 13 of the AV apparatus controller until now is sent to the other AV apparatus controller transmitting the notification of the new user setting.

Next, in step S15, a process for terminating the current user's viewing is executed (e.g., the tuner 421 and the display 431 shown in Fig. 7 are powered off).

Next, in step S16, a process for canceling the current user setting is executed. Then, the mode shifts to the "user setting wait mode" shown in steps S1 to S7.

Although this embodiment has shown the case where three unit systems A, B and C are used, it is obvious that the invention can be generally applied to an optional set of two or more unit systems.

Although this embodiment has shown the case where the number of AV apparatuses held in each unit system is limited, it is obvious that the invention can be generally applied to the case where an optional number of AV apparatuses inclusive of a single AV apparatus are held in each unit system.

Although this embodiment has shown the case where the remote controller is limited to the remote controller 2, it is obvious that the invention can be also applied to the case where an optional number of remote controllers are provided in the system as a whole, and to the case where an optional number of remote controllers inclusive of a single remote controller are provided in each unit system.

Although this embodiment has shown the case where each of the unit systems A, B and C has one AV apparatus controller, the invention can be generally applied to the case where one AV apparatus controller corresponds to a plurality of unit systems.

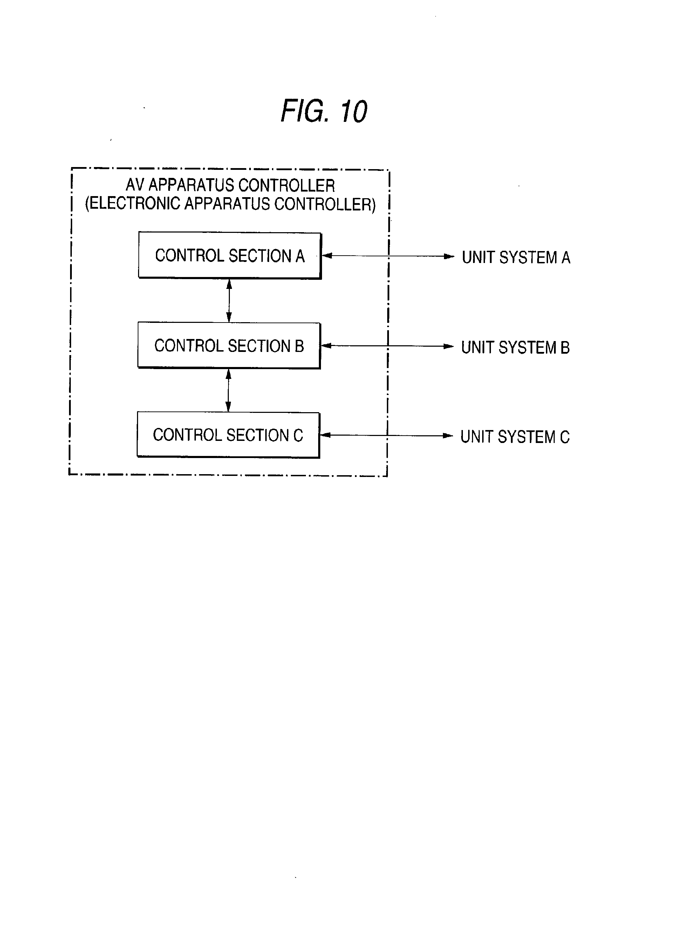

Fig. 10 shows an example of the AV apparatus controller in the latter case. The AV apparatus controller has a control section A for controlling a unit system A, a control section B for controlling a unit system B, and a control section C for controlling a unit system C. Incidentally, the configuration of each of the control sections A, B and C is the same as that of the control section 10 shown in Fig. 2.

The control sections A, B and C are connected to the unit systems by networks so that the control sections A, B and C can two-way communicate with the unit systems respectively. The control sections A, B and C are connected to one another by a network in the AV apparatus controller so that the control sections A, B and C can two-way communicate with one another.

Assuming now that the user moves from a room having the unit system A to a room having the unit system B, the control section is switched from the control section A to the control section B by the aforementioned operation. That is, the AV apparatus controller controlled by the control section A is switched to the AV apparatus controller controlledby the control section B with the movement of the user. In this embodiment, however, each of the all unit systems is formed to have a transmission/reception unit (communication unit) to/from a remote controller.

Further, for the user setting described in this embodiment, the remote controller may have some user identification unit (such as an entrance/exit sensor, a push button, a wireless tag, a portable telephone, etc.) so that the user identification unit can be operated.

In addition, with respect to one of post-process means described in this embodiment, that is, with respect to the process for terminating the current user' s viewing or the process for powering on and re-setting new AV apparatuses in a room after the movement of the user, control such as adjustment of air-conditioning (air conditioner) and brightness (illuminator) in the room can be added easily in the process.

Although this embodiment has shown the case where AV apparatuses are used as electronic apparatuses, the invention can be also applied to electronic apparatuses such as air conditioners and illuminators as described above.

As described above, in accordance with the invention, there is an effect that the operation required for powering off the previously used electronic apparatuses with the location movement of the user can be dispensed with while the operation required for powering on and re-setting the newly used electronic apparatuses at the location where the user has moved can be dispensed with.

As described above, according to the invention, there is provided an electronic apparatus network system including a plurality of unit systems which are connected to one another by a network so that the unit systems can two-way communicate with one another, each of the unit systems including at least one electronic apparatus, and an electronic apparatus controller having a control section for networking the at least one electronic apparatus, wherein the electronic apparatus network system further includes a unit for handing over settings in accordance with location movement of a user in such a manner that settings in use state of at least one electronic apparatus included in one unit system used by the user before the movement of the user are handed over to at least one electronic apparatus included in another unit system newly used by the user after the movement of the user. Accordingly, the operation required for terminating (e.g., powering off) the previously used electronic apparatuses with the location movement of the user can be dispensed with while the operation for starting (e.g., powering on) the newly used electronic apparatuses and the operation for re-setting the newly used electronic apparatuses by the same procedure as applied to the previously used electronic apparatuses before the movement can be dispensed with.

The electronic apparatus network system according to the invention further includes: a user setting command unit for giving a user setting command to a newly selected electronic apparatus controller to set the user as a new user when the electronic apparatus controller is newly selected to control a unit system placed at a location after the movement of the user, in accordance with the location movement of the user; and a user setting unit for setting the user as a new user by the newly selected electronic apparatus controller which has received the user setting command. Accordingly, there can be achieved an electronic apparatus network system in which the use conditions set in an electronic apparatus controller of a unit system installed at a location before the movement of the user can be handed over to another electronic apparatus controller of another unit system installed at a location after the movement of the user.

The electronic apparatus network system according to the invention further includes: a history information sending unit for sending history information indicating a history of user operations to any other control section when a notification of the user setting is received from the any other control section with the location movement of the user and the already set user is identical to a user designated by the notification of the user setting; and an operation restoration unit for operating at least one electronic apparatus connected to the newly selected electronic apparatus controller on the basis of history information indicating a history of user operations when a response to the notification is received and the history information is contained in the response. Accordingly, the operations which have been made on the previously used electronic apparatus controller by the user before the switching can be reproduced on electronic apparatuses connected to the newly used electronic apparatus controller after the switching on the basis of the history information indicating a history of user operations.

The electronic apparatus network system according to the invention further includes an operation command transmission unit for transmitting the operation command inputted by the user to a nearest electronic apparatus controller. Accordingly, because the operation command transmission unit transmits the operation command inputted by the user to the nearest electronic apparatus controller, the location after the movement of the user can be specified surely.

In the electronic apparatus network system according to the invention, the operation command transmission unit has a user identification unit constituted by an entrance/exit sensor, a push button, a wireless tag or a portable telephone. Accordingly, there can be achieved an electronic apparatus network system in which the user can be identified easily and surely.

In the electronic apparatus network system according to the invention, the operation command transmission unit has a two-way communication unit, and a display unit for displaying the operation command/data inputted by the user and information transmitted from the nearest electronic apparatus controller. Accordingly, there can be achieved an electronic apparatus network system in which the user's input operation transmitted by the operation command transmission unit can be made surely while information about the states of the electronic apparatuses to be operated by the user can be grasped.

In the electronic apparatus network system according to the invention, one electronic apparatus controller corresponds to a plurality of unit systems; and each of the plurality of unit systems has a communication unit which can communicate with the operation command transmission unit. Accordingly, there can be achieved an electronic apparatus network system in which a large installation place is not required as well as the cost can be saved.

According to the invention, there is provided an electronic apparatus controller having a control section connected to at least one electronic apparatus and belonging to each of a plurality of unit systems which are connected to one another by a network so that the unit systems can two-way communicate with one another, the electronic apparatus controller including: an operation unit for operating at least one electronic apparatus connected to the electronic apparatus controller when an operation command inputted by a user is received; a history information sending unit for sending history information indicating a history of user operations to any other control section when a notification of user setting is received from the any other control section with location movement of the user and the already set user is identical to a user designated by the notification of the user setting; a user setting unit for setting the user as a new user when a user setting command to set the user as a new user is received with the location movement of the user; and an operation restoration unit for operating at least one electronic apparatus connected to the electronic apparatus controller on the basis of the history information indicating a history of user operations when a response to the notification is received and the history information is contained in the response. Accordingly, there can be achieved an electronic apparatus controller having a control section necessary for forming an electronic apparatus network system in which the operation required for terminating (e.g., powering off) the previously used electronic apparatuses with the location movement of the user can be dispensed with while the operation for starting (e.g., powering on) the newly used electronic apparatuses and the operation for re-setting the newly used electronic apparatuses by the same procedure as applied to the previously used electronic apparatuses before the movement can be dispensed with.

According to the invention, there is provided an electronic apparatus control method for executing a process of an electronic apparatus controller having a control section which is connected to at least one electronic apparatus and which belongs to each of a plurality of unit systems, the unit systems being connected to one another by a network so that the unit systems can two-way communicate with one another, the method including: the operating step of operating at least one electronic apparatus connected to the electronic apparatus controller when an operation command inputted by a user is received; the history information sending step of sending history information indicating a history of user operations to any other control section when a notification of user setting is received from the any other control section with location movement of the user and the already set user is identical to a user designated by the notification of the user setting; the post-process step of executing a process for canceling the already set user's viewing as a post-process after sending of the history information; the user setting step of setting the user as a new user when a user setting command to set the user as a new user is received with the location movement of the user; the user setting notifying step of notifying all of the other control sections of setting of the user as a new user after the user setting; and the operation restoring step of operating at least one electronic apparatus connected to the electronic apparatus controller on the basis of the history information indicating a history of user operations when a response to the notification is received and the history information is contained in the response. Accordingly, there can be achieved an electronic apparatus control method for making an electronic apparatus network system execute necessary control, in which the operation required for terminating (e.g., powering off) the previously used electronic apparatuses with the location movement of the user can be dispensed with while the operation for starting (e.g., powering on) the newly used electronic apparatuses and the operation for re-setting the newly used electronic apparatuses by the same procedure as applied to the previously used electronic apparatuses before the movement can be dispensed with.

## Claims

1. An electronic apparatus connection system, comprising:
a plurality of unit systems, at least two of the unit systems respectively including a control section for controlling at least a portion of the unit system to which the control section belongs;
wherein
the control sections are connected so as to mutually communicate;
each of the control section stores setting as to a use state of the unit system to which the control section belongs; and
the control section in one of the plurality of unit systems hands the setting to another control section in another one of the unit systems in accordance with location movement of a user.

2. The electronic apparatus connection system according to claim 1, further comprising wherein
a user setting command unit; and
a user setting unit;
whether
one of the control sections is selected so as to control a unit system placed at a location after the movement of the user, in accordance with the location movement of the user;
the user setting command unit gives a user setting command to a newly selected control section to set the user as a new user; and
the user setting unit sets the user as a new user of the newly selected control section which receives the user setting command.

3. The electronic apparatus connection system according to claim 2,
wherein
the control section gives a user setting notification indicating that the new user is set in the newly selected control section;
the control section includes a history information sending unit and an operation restoration unit;
the history information sending unit sends history information indicating a history of user operations to any other control section when a notification of the user setting is received from the any other control section and the already set user is identical to a user designated by the notification of the user setting; and
the operation restoration unit operates the unit system on the basis of the history information when a response to the notification is received and the history information is contained in the response.

4. The electronic apparatus connection system according to claim 1, further comprising:
an operation command transmission unit for transmitting the operation command inputted by the user to a nearest control section therefrom.

5. The electronic apparatus connection system according to claim 4, wherein
the operation command transmission unit has a user identification unit, the user identification including an entrance/exit sensor, a push button, a wireless tag or a portable telephone.

6. The electronic apparatus connection system according to claim 4, wherein the operation command transmission unit has a two-way communication unit, and a display unit for displaying the operation command/data inputted by the user and information transmitted from the nearest electronic apparatus controller.

7. The electronic apparatus connection system according to claim 4, wherein
at least one of the control sections is capable of controlling a plurality of unit systems each having a communication unit; and
the communication unit is capable of communicating with the operation command transmission unit.

8. An electronic apparatus controller for controlling at least one electronic apparatus, the electronic apparatus controller belonging to each of a plurality of unit systems which are connected to one another so that the unit systems can communicate with one another, the electronic apparatus controller comprising:
an operation unit for operating the at least one electronic apparatus when an operation command inputted by a user is received;
a history information sending unit for sending history information indicating a history of user operations to any other control section when a notification of user setting is received from the any other control section with location movement of the user and the already set user is identical to a user designated by the notification of the user setting;
a user setting unit for setting the user as a new user when a user setting command to set the user as a new user is received with the location movement of the user; and
an operation restoration unit for operating at least one electronic apparatus connected to the electronic apparatus controller on the basis of the history information indicating a history of user operations when a response to the notification is received and the history information is contained in the response.

9. An electronic apparatus control method of a electronic apparatus controller for controlling at least one electronic apparatus, the electronic apparatus controller belonging to each of a plurality of unit systems which are connected to one another so that the unit systems can communicate with one another, the method comprising:
operating the at least one electronic apparatus connected when an operation command inputted by a user is received;
sending history information indicating a history of user operations to any other control section when a notification of user setting is received from the any other control section with location movement of the user and the already set user is identical to a user designated by the notification of the user setting;
canceling the already set user' s viewing as a post-process after sending of the history information;
setting the user as a new user when a user setting command to set the user as a new user is received with the location movement of the user;
notifying all of the other control sections of setting of the user as a new user after the user setting; and
operating at least one electronic apparatus connected to the electronic apparatus controller on the basis of the history information indicating a history of user operations when a response to the notification is received and the history information is contained in the response.
